# EUROPÄISCHE PATENTSCHRIFT

(11) **EP 2 027 474 B1**
(45) Veröffentlichungstag und Bekanntmachung des Hinweises auf die Patenterteilung: **15.09.2010**
(21) Anmeldenummer: 07727691.3
(22) Anmeldetag: 03.04.2007
(51) Int. Cl.: G01P 15/08, G01P 15/125

(54) **BESCHLEUNIGUNGSSENSOR**
ACCELERATION SENSOR
CAPTEUR D'ACCÉLÉRATION

(30) Priorität: 16.05.2006 DE 102006022811
(43) Veröffentlichungstag der Anmeldung: 25.02.2009
(73) Patentinhaber: Robert Bosch GmbH, 70442 Stuttgart (DE)
(72) Erfinder: SCHUBERT, Dietrich, 72762 Reutlingen (DE); CLASSEN, Johannes, 72764 Reutlingen (DE); TEBJE, Lars, 72770 Reutlingen (DE); SEELHORST, Johannes, 72793 Pfullingen (DE)
(86) Internationale Anmeldenummer: PCT/EP2007/053220
(87) Internationale Veröffentlichungsnummer: WO 2007/131835

(56) Entgegenhaltungen:
- US-A- 5 488 864
- US-A1- 2005 109 109
- US-B- 6 230 566

## Beschreibung

### Stand der Technik

Die vorliegende Erfindung betrifft einen Beschleunigungssensor gemäß dem Oberbegriff des Patentanspruchs 1.

Ein solcher Beschleunigungssensor ist aus der EP 0 244 581 bekannt und wird beispielsweise zum Auslösen von Insassenschutzvorrichtungen für Kraftfahrzeuge wie Airbag, Gurtstraffer, Warnblinkanlage und Überrollbügel verwendet. Der Beschleunigungssensor umfaßt eine seismische Masse, die einen ersten und einen zweiten Flügel aufweist, die um einen Torsionssteg drehbar sind, und ein Basissubstrat, wobei die Flügel derart ausgebildet sind, daß aufgrund ihrer Massenverteilungen unterschiedliche Drehmomente auf den Torsionssteg ausgeübt werden.

Die seismische Masse ist in einem Gehäuse untergebracht, das mit einem Medium (Flüssigkeit), wie etwa Silikonöl, gefüllt ist. Wenn die seismische Masse aufgrund einer Beschleunigung ausgelenkt wird, erfährt sie eine Dämpfungskraft aufgrund des Reibungswiderstands in der Flüssigkeit. Durch die Reibung wird eine andauernde Vibration der seismischen Masse verhindert.

Nachteilig ist, daß die seismische Masse ein unterschiedliches Drehmoment aufgrund unterschiedlicher Dämpfungskräfte für eine Auslenkung in der einen Richtung und für eine Auslenkung in der anderen Richtung erfährt. Ebenso wirken auf den Torsionssteg unterschiedliche Drehmomente abhängig davon, welcher Flügel gegen das Basissubstrat anschlägt. Dies hat zur Folge, daß betragsmäßig gleiche Beschleunigungen in entgegengesetzten Richtungen betragsmäßig unterschiedliche Sensorsignale hervorrufen. Insbesondere Vibrationen können daher zu einer systematischen Verfälschung der Meßergebnisse führen.

Die Druckschrift US2005/0109109 beschreibt eine mikromechanische Vorrichtung in Form einer asymmetrischen Wippe. Die asymmetrische Dämpfung wird dadurch reduziert, dass die Masse perforiert oder der Abstand der Masse zum Substrat vergrößert wird.

Die Druckschrift US6230566 beschreibt eine mikromechanische Vorrichtung mit einer seismischen Masse mit zwei Flügeln, wobei ein Flügel für eine asymmetrische Massenverteilung perforiert ist.

### Offenbarung der Erfindung

Der vorliegenden Erfindung liegt die Aufgabe zugrunde, einen Sensor zu schaffen, dessen Sensorsignal für zwei betragsmäßig gleiche Beschleunigungen in entgegengesetzten Richtungen betragsmäßig gleich ist.

Die der Erfindung zugrundeliegende Aufgabe wird durch einen Beschleunigungssensor mit den Merkmalen des kennzeichnenden Teils des Patentanspruchs 1 gelöst.

Erfindungsgemäß sind die seismische Masse und das Basissubstrat derart ausgebildet sind, daß auf den mindestens einen Torsionssteg für eine Torsion und für eine betragsmäßig gleiche Torsion in der entgegengesetzten Richtung betragsmäßig gleiche Dämpfungsdrehmomente wirken.

Vorteilhafterweise läßt sich die Verfälschung einer zeitlichen Mittelung aufgrund von Vibrationen beseitigen. Betragsmäßig gleiche Torsionen in entgegengesetzten Richtungen sind in diesem Zusammenhang Torsionen, die zu Auslenkungen der seismischen Masse um den gleichen Winkel in entgegengesetzten Richtungen führen.

In einer bevorzugten Ausführungsform ist am Basissubstrat unter dem ersten Flügel ein Vorsprung vorgesehen.

Vorteilhafterweise ist die Ausbildung eines Vorsprungs am Basissubstrat zur Symmetrisierung der Dämpfungsdrehmomente eine konstruktiv einfache Lösung.

In einer Weiterbildung der bevorzugten Ausführungsform ist auf dem Vorsprung eine erste Elektrode vorgesehen, ist unter dem zweiten Flügel auf dem Basissubstrat eine zweite Elektrode vorgesehen, und weist die erste Elektrode eine geringere Fläche als die zweite Elektrode auf.

Vorteilhafterweise kann ein ausreichend großer Vorsprung geschaffen werden, wobei die Variation der Kapazitäten zwischen der ersten Elektrode und dem ersten Flügel und zwischen der zweiten Elektrode und dem zweiten Flügel dadurch symmetrisiert wird, daß die Elektrode auf dem Vorsprung eine geringere Fläche als die zweite Elektrode aufweist.

In einer alternativen Weiterbildung der bevorzugten Ausführungsform ist unter dem ersten Flügel und unter dem zweiten Flügel auf dem Basissubstrat jeweils eine Elektrode vorgesehen.

Vorteilhafterweise läßt sich durch die beidseitige Anbringung der Elektroden auf dem Substrat eine symmetrische Variation der Kapazitäten zwischen der ersten Elektrode und dem ersten Flügel und zwischen der zweiten Elektrode und dem zweiten Flügel einfach erreichen.

In noch einer Weiterbildung der bevorzugten Ausführungsform sind in dem ersten Flügel und dem zweiten Flügel durchgehende Löcher vorgesehen, und nehmen die Löcher im ersten Flügel eine größere Gesamtfläche ein als die Löcher im zweiten Flügel. Vorteilhafterweise lassen sich durch Vorsehung von durchgehenden Löchern die Dämpfungsdrehmomente und Massenverteilungen prozeßtechnisch einfach vorgeben.

In noch einer weiteren bevorzugten Ausführungsform ist in einem der Flügel am Ende, welches dem mindestens einen Torsionssteg gegenüberliegt, eine Aussparung vorgesehen.

Vorteilhafterweise läßt sich durch die Vorsehung der Aussparung auf konstruktiv einfache Weise die Massenverteilung wesentlich beeinflussen.

In einer Weiterbildung der noch weiteren bevorzugten Ausführungsform sind in dem ersten Flügel und dem zweiten Flügel durchgehende Löcher vorgesehen, und nehmen die durchgehenden Löcher im ersten Flügel eine geringere Gesamtfläche einnehmen als die Löcher im zweiten Flügel.

Vorteilhafterweise kann auf konstruktiv einfache Weise der Effekt der Aussparung auf das Dämpfungsdrehmoment ausgeglichen werden.

In noch einer weiteren bevorzugten Ausführungsform ist der erste Flügel derart ausgebildet, daß eine Torsion des mindestens einen Torsionsstegs in einer ersten Richtung dadurch begrenzt ist, daß der erste Flügel gegen das Basissubstrat mit einem ersten Punkt auf einer ersten Kante anschlägt, ist der zweite Flügel derart ausgebildet ist, daß die Torsion des mindestens einen Torsionsstegs in einer zweiten Richtung, die der ersten Richtung entgegengesetzt ist, dadurch begrenzt ist, daß der zweite Flügel gegen das Basissubstrat mit einem zweiten Punkt auf einer zweiten Kante anschlägt, und ist der

Abstand des ersten Punktes von dem mindestens einen Torsionssteg gleich dem Abstand des zweiten Punktes von dem mindestens einen Torsionssteg.

Vorteilhafterweise ist das erste Anschlagsdrehmoment daher auch betragsmäßig gleich dem zweiten Anschlagsdrehmoment. Sogar beim Anschlag wird eine symmetrische Kennlinie für ein Sensorsignal für eine Auslenkung in beide Richtungen erhalten.

In noch einer weiteren bevorzugten Ausführungsform ist der mindestens eine Torsionssteg an zwei gegenüberliegenden Enden mit einem die seismische Masse umgebenden Stegsubstrat verbunden.

In einer weiteren bevorzugten Ausführungsform ist der mindestens eine Torsionssteg über ein Tragelement mit dem Basissubstrat verbunden.

Vorteilhafterweise läßt sich eine derartige Struktur durch ein einfaches Herstellungsverfahren anfertigen.

### Kurze Beschreibung der Zeichnungen

Im folgenden wird die Erfindung mit Bezugnahme auf die Zeichnungen näher beschrieben. Es zeigen:
FIG. 1 eine seismische Masse über einem Basissubstrat;
FIG. 2 eine Schnittansicht der seismischen Masse und des Basissubstrats aus FIG. 1;
FIG. 3 eine Schnittansicht der seismischen Masse und des Basissubstrats mit einem Vorsprung;
FIG. 4 eine Schnittansicht der seismischen Masse und des Basissubstrats mit dem Vorsprung aus FIG. 3;
FIG. 5 eine Schnittansicht der seismischen Masse und des Basissubstrats mit einem alternativen Vorsprung; und
FIG. 6 eine Schnittansicht der seismischen Masse und des Basissubstrats mit einem weiteren alternativen Vorsprung.

### Ausführungsformen der Erfindung

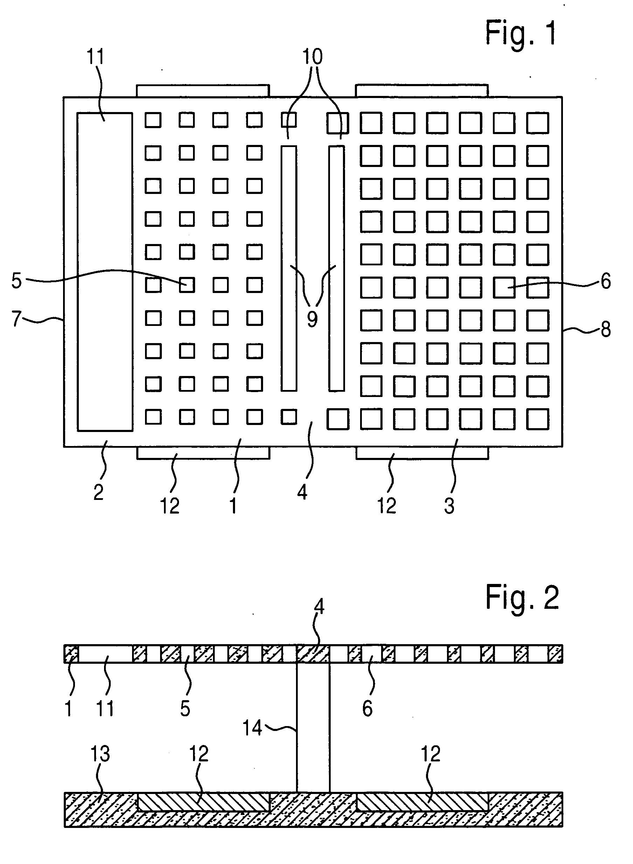

Fig. 1 zeigt eine seismische Masse 1 über einem Basissubstrat. Die seismische Masse 1 ist rechteckig und weist einen ersten Flügel 2 und einen zweiten Flügel 3 auf. Die seismische Masse 1 ist über zwei Torsionsstege 4 mit gleichen Abmessungen drehbar an einem Tragelement 14 verbunden, welches in der Mitte der seismischen Masse 1 angeordnet ist. Der erste Flügel 2 weist ein gitterförmiges Lochmuster aus durchgehenden quadratischen Löchern 5 und der zweite Flügel 3 weist ein gitterförmiges Lochmuster aus durchgehenden quadratischen Löchern 6 auf. Ein Punkt auf einer ersten Kante 7 des ersten Flügels 2, die den Torsionsstegen 4 gegenüberliegt, hat den gleichen Abstand von einem der Torsionsstege 4 wie ein Punkt auf einer zweiten Kante 8 des zweiten Flügels 3, die den Torsionsstegen 4 gegenüberliegt (Für die vorliegende Ausführung der seismischen Masse 1 als Viereck mit in der Mitte angeordneten Torsionsstegen 4 hat sogar jeder beliebige Punkt auf der ersten Kante 7 den gleichen Abstand von einem der Torsionsstege 4 wie jeder Punkt auf der zweiten Kante 8 des zweiten Flügels 3, die dem Torsionssteg 4 gegenüberliegt). Zwischen den zwei Torsionsstegen 4 und den Flügeln 2, 3 ist jeweils ein Spalt 9 ausgebildet. Die Flügel 2, 3 sind mit den Torsionsstegen 4 jeweils über mindestens eine Brücke 10 verbunden. Am Ende des ersten Flügels 2, welches den Torsionsstegen 4 gegenüberliegt, ist eine große viereckige Aussparung 11 vorgesehen. Die Löcher 6 auf dem zweiten Flügel 3 sind größer ausgebildet als die Löcher 5 auf dem ersten Flügel 2.

Die Anzahl der Löcher 6 ist die gleiche wie die Anzahl der Löcher 5. Die Löcher 6 nehmen daher eine größere Gesamtfläche ein. Statt die Löcher 6 größer auszubilden als die Löcher 5, kann auch eine größere Anzahl Löcher 6 für diese und alle weiteren Ausführungsformen verwendet werden. Unter der seismischen Masse 1 sind Elektroden 12 im Basissubstrat ausgebildet. Die Signale von den Elektroden 12 werden in einer Auswertungsschaltung ausgewertet, die monolithisch in dem Sensor integriert sein kann (nicht gezeigt). Die Elektroden sind beispielsweise eindiffundiert oder in Dünnschichttechnik aufgebracht.

Fig. 2 zeigt eine Schnittansicht der seismischen Masse 1 und des Basissubstrats 13 aus Fig. 1. Die seismische Masse 1 ist plattenförmig ausgebildet. Die Torsionsstege 4 sind über ein Tragelement 14 mit dem Basissubstrat 13 verbunden. Eine derartige Struktur kann beispielsweise erzeugt werden, indem eine Oxidschicht auf dem Basissubstrat 13 abgeschieden wird, in die Oxidschicht eine Aussparung eingeätzt wird, und dann eine Polysiliziumschicht abgeschieden wird. Die Polysiliziumschicht wird so definiert, daß eine Struktur in Form der seismischen Masse 1 entsteht. Dabei bildet das in der Aussparung im Oxid abgeschiedene Polysilizium das Tragelement 14. Das Oxid wird schließlich entfernt.

Eine auf den Sensor wirkende Beschleunigung, die von dem Basissubstrat 13 zu der seismischen Masse 1 hin entlang des Tragelements 14 gerichtet ist, verursacht aufgrund der Trägheit der seismischen Masse 1 ein erstes Drehmoment, welches der erste Flügel 2 auf die Torsionsstege 4 ausübt, und ein zweites Drehmoment, welches der zweite Flügel 3 auf die Torsionsstege 4 ausübt. Aufgrund seiner größeren Masse und seiner Massenverteilung, die weiter entfernt von den Torsionsstegen 4 zentriert ist, übt der zweite Flügel 3 dabei ein größeres Drehmoment auf die Torsionsstege 4 aus als der erste Flügel 2. Dementsprechend wird der zweite Flügel 3 zu dem Basissubstrat 13 hingedreht, während der erste Flügel 2 von dem Basissubstrat 13 weggedreht wird. Eine Beschleunigung in der entgegengesetzten Richtung führt zu einer entgegengesetzten Torsion der Torsionsstege 4 und einer entgegengesetzten Ausrichtung der Flügel 2, 3. Wenn die seismische Masse 1 stark ausgelenkt wird, schlägt die Kante 7 bzw. 8 an dem Basissubstrat 13 an. Da sich die Kanten 7 und 8 im gleichen Abstand von einem der Torsionsstege 4 befinden, wirkt dabei auf die Torsionsstege 4 ein betragsmäßig im wesentlichen gleiches Anschlagsdrehmoment. Das auf die Torsionsstege 4 wirkende Drehmoment läßt sich in zwei gleich große Drehmomente aufteilen, von denen jedes auf einen der Torsionsstege 4 wirkt. Die Aussagen über die Drehmomente sind daher auch richtig, wenn sie nur auf einen der Torsionsstege 4 bezogen werden.

Die seismische Masse 1 ist in einem Gehäuse untergebracht, welches mit einem Medium wie einem Gas (Stickstoff) gefüllt ist. Wenn sich die seismische Masse 1 aufgrund einer Beschleunigung um die Torsionsstege 4 dreht, wirkt dabei aufgrund der Reibung in dem umgebenden Medium ein Dämpfungsdrehmoment. Dieses Dämpfungsdrehmoment kann von der Drehrichtung abhängig sein. Jedoch sind die Löcher 6 größer ausgebildet als die Löcher 5, um den Effekt zu kompensieren, der von der Aussparung 11 herrührt. Die Torsionsstege 4 erfahren daher in beiden Drehrichtungen für eine beliebige Torsion betragsmäßig gleiche Drehmomente.

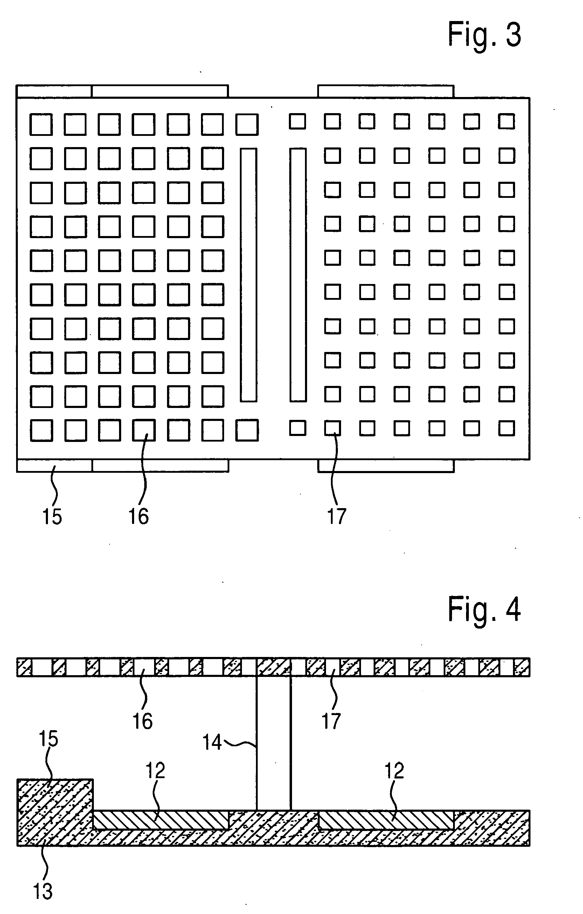

FIG. 3 zeigt eine weitere seismische Masse 1 über einem Basissubstrat 13 mit einem Vorsprung 15, der unter dem ersten Flügel 2 ausgebildet ist. Die ungleichen Massen und Massenverteilungen des ersten Flügels 2 und des zweiten Flügels 3. werden durch eine unterschiedliche Größe der Löcher 16 des ersten Flügels 2 und der Löcher 17 des zweiten Flügels 3 erreicht. Die Anzahl der Löcher 16 ist die gleiche wie die Anzahl der Löcher 17. Die Löcher 16 sind größer und nehmen daher auch eine größere Gesamtfläche ein. Die unterschiedlichen Größen der Löcher 16 und 17 beeinflussen aber die Dämpfungsdrehmomente, die abhängig von der Drehrichtung auf die Torsionsstege 4 wirken. Um diesen Effekt auf die Dämpfungsdrehmomente zu kompensieren, wird eine Abhängigkeit des Dämpfungsdrehmoments von der Ausbildung eines Vorsprungs 15 unter dem ersten Flügel 2 ausgenutzt. Alternativ oder in Kombination mit einem Vorsprung kann auch ein Loch unter dem zweiten Flügel 3 ausgebildet werden.

Betragsmäßig gleiche Dämpfungsdrehmomente in beiden entgegengesetzten Richtungen können also durch die besondere Ausbildung von Löchern und Aussparungen auf der seismischen Masse und Vorsehung eines Vorsprungs oder Lochs unter einem der Flügel 2, 3 der seismischen Masse 1 erreicht werden. Beide Maßnahmen können auch kombiniert werden.

FIG. 4 zeigt eine Schnittansicht der seismischen Masse und des Basissubstrats 13 mit dem Vorsprung 15 aus Fig. 3. Der Vorsprung 15 ist direkt neben der Elektrode 12 ausgebildet.

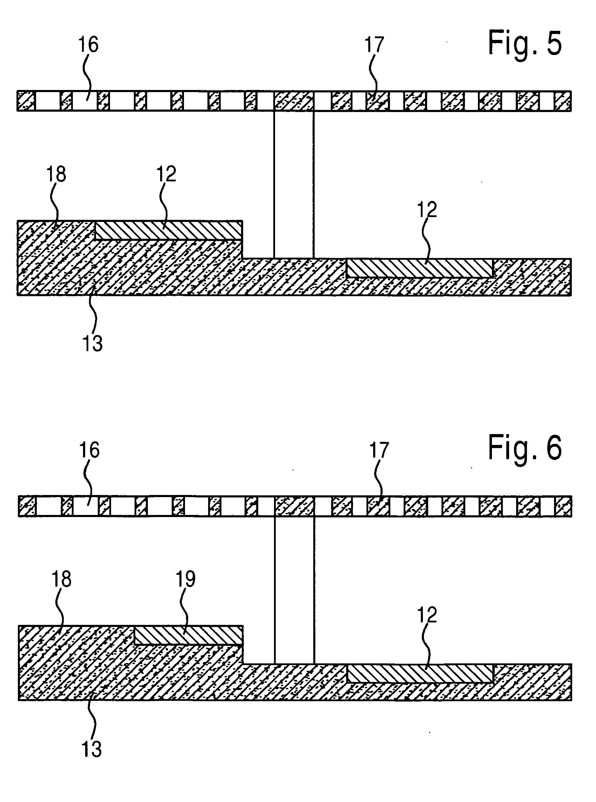

FIG. 5 zeigt eine Schnittansicht der seismischen Masse und des Basissubstrats 13 mit einem alternativen Vorsprung 18. Auf dem Vorsprung 18 ist die Elektrode 12 ausgebildet.

FIG. 6 zeigt eine Schnittansicht einer seismischen Masse und eines Basissubstrats 13 mit einem weiteren alternativen Vorsprung 18. Die auf dem Vorsprung 18 ausgebildete rechteckige Elektrode 19 weist eine geringere Breite, aber gleiche Länge wie die Elektrode 12 auf. Aufgrund der geringeren Fläche der Elektrode 19 wird ein Effekt auf die Kapazität kompensiert, der sich aus ihrer größeren Nähe zu der seismischen Masse 1 ergibt. Die Kapazität zwischen der seismischen Masse 1 und jeder der Elektroden 19, 12 ändern sich dann entsprechend für entgegengesetzte Torsionswinkel.

## Patentansprüche

1. Beschleunigungssensor mit einer seismischen Masse (1) über einem Basissubstrat (13), wobei die seismische Masse (1)einen ersten und einen zweiten Flügel (2, 3) aufweist, die um mindestens einen Torsionssteg (4) drehbar sind, wobei die Flügel (2, 3) derart ausgebildet sind, dass aufgrund ihrer Massenverteilungen unterschiedliche Drehmomente auf den mindestens einen Torsionssteg (4) ausgeübt werden, **dadurch gekennzeichnet, dass** die seismische Masse (1) und das Basissubstrat (13) derart ausgebildet sind, dass auf den mindestens einen Torsionssteg (4) für eine Torsion und für eine betragsmäßig gleiche Torsion in der entgegengesetzten Richtung betragsmäßig gleiche Dämpfungsdrehmoment wirken, wobei der erste Flügel (2) derart ausgebildet ist, dass eine Torsion des mindestens einen Torsionsstegs (4) in einer ersten Richtung **dadurch** begrenzt ist, dass der erste Flügel (2) gegen das Basissubstrat (13) mit einem ersten Punkt auf einer ersten Kante (7) anschlägt, dass der zweite Flügel (3) derart ausgebildet ist, dass die Torsion des mindestens einen Torsionsstegs (4) in einer zweiten Richtung, die der ersten Richtung entgegengesetzt ist, **dadurch** begrenzt ist, dass der zweite Flügel (3) gegen das Basissubstrat (13) mit einem zweiten Punkt auf einer zweiten Kante (8) anschlägt, und dass der Abstand des ersten Punktes von dem mindestens einen Torsionssteg (4) gleich dem Abstand des zweiten Punktes von dem mindestens einen Torsionssteg (4) ist.

2. Beschleunigungssensor nach Anspruch 1, **dadurch gekennzeichnet, dass** am Basissubstrat (13) unter dem ersten Flügel (2) ein Vorsprung (15, 18) vorgesehen ist.

3. Beschleunigungssensor nach Anspruch 2, **dadurch gekennzeichnet, dass** auf dem Vorsprung eine erste Elektrode (19) vorgesehen ist, dass unter dem zweiten Flügel (3) auf dem Basissubstrat (13) eine zweite Elektrode vorgesehen ist, und dass die erste Elektrode (19) eine geringere Fläche aufweist als die zweite Elektrode (12).

4. Beschleunigungssensor nach einem der vorhergehenden Ansprüche, **dadurch gekennzeichnet, dass** unter dem ersten Flügel (2) und unter dem zweiten Flügel (3) auf dem Basissubstrat (13) jeweils eine Elektrode (12) vorgesehen ist.

5. Beschleunigungssensor nach einem der Ansprüche 2 bis 4, **dadurch gekennzeichnet, dass** in dem ersten Flügel (2) und dem zweiten Flügel (3) durchgehende Löcher (5, 6, 16,17) vorgesehen sind, und dass die Löcher im ersten Flügel (2) eine größere Gesamtfläche einnehmen als die Löcher (6) im zweiten Flügel (3).

6. Beschleunigungssensor nach einem der Ansprüche 1 bis 4, **dadurch gekennzeichnet, dass** in einem der Flügel (2, 3) am Ende, welches dem mindestens einen Torsionssteg (4) gegenüberliegt, eine Aussparung (11) vorgesehen ist.

7. Beschleunigungssensor nach Anspruch 6, **dadurch gekennzeichnet, dass** in dem ersten Flügel (2) und dem zweiten Flügel (3) durchgehende Löcher (5, 6, 16, 17) vorgesehen sind, und dass die durchgehenden Löcher (5) im ersten Flügel (2) eine geringere Gesamtfläche einnehmen als die Löcher (6) im zweiten Flügel (3).

8. Beschleunigungssensor nach Anspruch 1, **dadurch gekennzeichnet, dass** der mindestens eine Torsionssteg (4) an zwei gegenüberliegenden Enden mit einem die seismische Masse (1) umgebenden Stegsubstrat verbunden ist.

9. Beschleunigungssensor nach Anspruch 1, **dadurch gekennzeichnet, dass** der mindestens eine Torsionssteg (4) über ein Tragelement (14) mit dem Basissubstrat (13) verbunden ist.

## Claims

1. Acceleration sensor having a seismic mass (1) above a basic substrate (13), the seismic mass (1) having a first and a second wing (2, 3) which are rotatable about at least one torsion web (4), the wings (2, 3) being designed in such a way that, on account of their mass distributions, different torques are exerted upon the at least one torsion web (4), **characterized in that** the seismic mass (1) and the basic substrate (13) are designed in such a way that damping torques of identical amount act upon the at least one torsion web (4) for one torsion and for a torsion of identical amount in the opposite direction, the first wing (2) being designed in such a way that a torsion of the at least one torsion web (4) in a first direction is limited **in that** the first wing (2) butts against the basic substrate (13) with a first point on a first edge (7), **in that** the second wing (3) is designed in such a way that the torsion of the at least one torsion web (4) in a second direction, which is opposite to the first direction, is limited **in that** the second wing (3) butts against the basic substrate (13) with a second point on a second edge (8), and **in that** the distance of the first point from the at least one torsion web (4) is identical to the distance of the second point from the at least one torsion web (4).

2. Acceleration sensor according to Claim 1, **characterized in that** a projection (15, 18) is provided, under the first wing (2), on the basic substrate (13).

3. Acceleration sensor according to Claim 2, **characterized in that** a first electrode (19) is provided on the projection, **in that** a second electrode is provided, under the second wing (3), on the basic substrate (13), and **in that** the first electrode (19) has a smaller area than the second electrode (12).

4. Acceleration sensor according to one of the preceding claims, **characterized in that** an electrode (12) is provided, in each case under the first wing (2) and under the second wing (3), on the basic substrate (13).

5. Acceleration sensor according to one of Claims 2 to 4, **characterized in that** continuous holes (5, 6, 16, 17) are provided in the first wing (2) and the second wing (3), and **in that** the holes in the first wing (2) occupy a larger overall area than the holes (6) in the second wing (3).

6. Acceleration sensor according to one of Claims 1 to 4, **characterized in that** a clearance (11) is provided in one of the wings (2, 3) at the end which lies opposite the at least one torsion web (4).

7. Acceleration sensor according to Claim 6, **characterized in that** continuous holes (5, 6, 16, 17) are provided in the first wing (2) and the second wing (3), and **in that** the continuous holes (5) in the first wing (2) occupy a smaller overall area than the holes (6) in the second wing (3).

8. Acceleration sensor according to Claim 1, **characterized in that** the at least one torsion web (4) is connected at two opposite ends to a web substrate surrounding the seismic mass (1).

9. Acceleration sensor according to Claim 1, **characterized in that** the at least one torsion web (4) is connected to the basic substrate (13) via a carrying element (14).

## Revendications

1. Capteur d'accélération comprenant une masse sismique (1) par-dessus un substrat de base (13), la masse sismique (1) présentant une première et une deuxième aile (2, 3), qui peuvent tourner autour d'au moins une barre de torsion (4), les ailes (2, 3) étant réalisées de telle sorte que sur la base de leurs répartitions de masse, différents couples soient exercés sur l'au moins une barre de torsion (4), **caractérisé en ce que** la masse sismique (1) et le substrat de base (13) sont réalisés de telle sorte que des couples d'amortissement de même ampleur agissent sur l'au moins une barre de torsion (4) pour une certaine torsion et pour une torsion de même ampleur dans le sens contraire, la première aile (2) étant réalisée de telle sorte qu'une torsion de l'au moins une barre de torsion (4) soit limitée dans une première direction par le fait que la première aile (2) bute contre le substrat de base (13) avec un premier point sur la première arête (7), **en ce que** la deuxième aile (3) est réalisée de telle sorte que la torsion de l'au moins une barre de torsion (4) dans une deuxième direction, opposée à la première direction, soit limitée par le fait que la deuxième aile (3) bute contre le substrat de base (13) avec un deuxième point sur une deuxième arête (8), et **en ce que** la distance du premier point à l'au moins une barre de torsion (4) est égale à la distance du deuxième point à l'au moins une barre de torsion (4).

2. Capteur d'accélération selon la revendication 1, **caractérisé en ce que** l'on prévoit une saillie (15, 18) sur le substrat de base (13) et la première aile (2).

3. Capteur d'accélération selon la revendication 2, **caractérisé en ce que** l'on prévoit sur la saillie une première électrode (19), **en ce que** l'on prévoit sous la deuxième aile (3) sur le substrat de base (13) une deuxième électrode, et **en ce que** la première électrode (19) présente une plus petite surface que la deuxième électrode (12).

4. Capteur d'accélération selon l'une quelconque des revendications précédentes, **caractérisé en ce que** l'on prévoit sous la première aile (2) et sous la deuxième aile (3) sur le substrat de base (13) à chaque fois une électrode (12).

5. Capteur d'accélération selon l'une quelconque des revendications 2 à 4, **caractérisé en ce que** dans la première aile (2) et la deuxième aile (3) sont prévus des trous traversants (5, 6, 16, 17), et **en ce que** les trous dans la première aile (2) occupent une plus grande surface totale que les trous (6) dans la deuxième aile (3).

6. Capteur d'accélération selon l'une quelconque des revendications 1 à 4, **caractérisé en ce que** l'on prévoit un évidement (11) dans l'une des ailes (2, 3) à l'extrémité qui est opposée à l'au moins une barre de torsion (4).

7. Capteur d'accélération selon la revendication 6, **caractérisé en ce que** dans la première aile (2) et la deuxième aile (3) sont prévus des trous traversants (5, 6, 16, 17), et **en ce que** les trous (5) dans la première aile (2) occupent une plus petite surface totale que les trous (6) dans la deuxième aile (3).

8. Capteur d'accélération selon la revendication 1, **caractérisé en ce que** l'au moins une barre de torsion (4) est connectée à deux extrémités opposées à un substrat de barre entourant la masse sismique (1).

9. Capteur d'accélération selon la revendication 1, **caractérisé en ce que** l'au moins une barre de torsion (4) est connectée par le biais d'un élément de support (14) au substrat de base (13).
